# EUROPÄISCHE PATENTANMELDUNG

(11) **EP 2 803 463 A1**
(43) Veröffentlichungstag der Anmeldung: **19.11.2014**
(21) Anmeldenummer: 14167529.8
(22) Anmeldetag: 08.05.2014
(51) Int. Cl.: B29C 45/00, B29C 45/14, B29C 45/16, H01H 13/88

(54) **Funktionsträger mit Tastenfunktionen**

(30) Priorität: 13.05.2013 CH 9422013
(71) Anmelder: Abatek International AG, 8303 Bassersdorf (CH)
(72) Erfinder: Keist, Christoph, 9630 Wattwil (CH); Keiser, Swen, 5605 Dottikon (CH); Ehrig, Frank, 8645 Jona (CH); Marty, Daniel, 8620 Wetzikon (CH)
(74) Vertreter: Bremi, Tobias Hans

(57) **Zusammenfassung**

Die Erfindung betrifft ein Verfahren zur Herstellung eines multifunktionalen Funktionsträgers (11) mit einer steifen Trägerstruktur (5), in welcher Bedienungselemente (7) und/oder Anzeigeelemente (9) hinter einer über im wesentlichen den gesamten Funktionsträger geschlossenen, transparenten Oberflächenschicht (1) angeordnet sind. Des weiteren betrifft die Erfindung der Arten hergestellte Funktionsträger. Das Verfahren ist dadurch gekennzeichnet, dass i) eine flache, flexible und wenigstens bereichsweise transparente Kunststofffolie (3) mit einer Dicke im Bereich von 0.1-0.4 mm vorgelegt indem sie von Rolle (26) zugeführt wird; ii) die flache Kunststofffolie (3) positionsgenau in eine Spritzgussform eingelegt wird, und die Kunststofffolie (3) unter Ausbildung eines im wesentlichen zusammenhängenden harten Kunststoffträgers (5) auf der ersten Seite hinterspritzt wird, wobei die Spritzgussform derart ausgestaltet ist, dass im Bereich der Bedienungselemente (7) und/oder Anzeigeelemente (9) wenigstens bereichsweise die Kunststofffolie (3) nicht hinterspritzt wird und freiliegend in Form von wenigstens zwei Aussparungen (13) verbleibt; iii) auf der der ersten Seite abgewandten zweiten Seite die Kunststofffolie (3) in der gleichen oder nach Übertragung des Rohlings in eine weitere Spritzgussform in dieser weiteren Spritzgussform im wesentlichen vollflächig mit einer transparenten härtenden Vergussmasse in einem RIM-Verfahren überflutet und unter Ausbildung einer geschlossenen transparenten Oberflächenschicht (1) mit einer Dicke von über im wesentlichen den gesamten Funktionsträger (11) wenigstens 0.1 mm beschichtet wird, wobei sich im Bereich der Aussparungen (13) wenigstens bereichsweise flexible Membranbereiche (6) ausbilden; iv)in die Aussparungen (13) Bedienungselemente (7) und/oder Anzeigeelemente (9) eingelegt und mit dem Kunststoffträger (5) verbunden werden.

## Beschreibung

### TECHNISCHES GEBIET

Die vorliegende Erfindung betrifft ein Verfahren zur Herstellung eines multifunktionalen Funktionsträgers, beispielsweise einer Konsolenstruktur für ein Fahrzeug oder ein Gerät, mit einer steifen Trägerstruktur, in welcher Bedienungselemente und/oder Anzeigeelemente hinter einer über im wesentlichen den gesamten Funktionsträger geschlossenen, transparenten Oberflächenschicht angeordnet sind. Des weiteren betrifft die Erfindung derart hergestellte Funktionsträger.

### STAND DER TECHNIK

Heute werden Bedienelemente und Anzeigegeräte sowie Tasten jeglicher Art im Automobil-Innenraum in Aussparungen einer grossen Blende integriert. Dadurch entstehen Spalte und Materialübergänge.

Die heute bekannten Lösungen lassen sich wie folgt zusammenfassen:
Folientastaturen mit Prägungen oder Lackauftrag: Folientastaturen erfüllen die Anforderungen von geschlossener Oberfläche und durch Prägungen oder selektiven Lack-oder Silikonauftrag von angeformten Tastengeometrien, sind jedoch immer auf eine flache Grundgeometrie beschränkt. Siehe z.B. DE 20 2005 012 021 U1.

Tiefgezogene Folie: Durch Tiefziehen können Folien auf eine dreidimensionale Form gebracht werden und auch Tastengeometrien können angeformt werden. Einschränkungen ergeben sich durch die notwendingen Biegeradien (keine scharfen Kanten möglich), den minimalen Abstand der Tasten (genügend Material für das Tiefziehen muss zwischen den Tasten vorhanden sein). Auch die funktionelle Betätigung einer solchen Taste ist nicht einfach zu realisieren, da die verformte Folie den Tastenhub mitmachen muss. Solche Folien neigen auch stark dazu, schnell zu brechen bei einem Betätigungsdauerlauftest.

Silikonoberfläche: Aus Silikon können frei geformte funktionelle Bedienoberflächen hergestellt werden. Diese Lösung zeichnet sich aus durch eine weiche Oberfläche und beschränkte Brillanz der Silikon-Farben. Aus diesem Grund wird diese Lösung gerade für grossflächige Anwendungen oftmals nicht gewählt.

### DARSTELLUNG DER ERFINDUNG

Ziel dieser Erfindung ist es u.a., eine geschlossene dreidimensional geformte Blende mit integrierten Bedien- und/oder Anzeigeelementen aus einem hochwertig anmutenden Kunststoff herzustellen. Dabei haben die Bedienelemente / Tasten bevorzugtermassen ein taktiles Feedback, welches für die Bediensicherheit von zentraler Bedeutung ist.

Damit betrifft die vorliegende Erfindung zunächst ein Verfahren nach Anspruch 1 sowie einen entsprechend hergestellten multifunktionalen Funktionsträger.

Konkret betrifft die Erfindung einerseits ein Verfahren zur Herstellung eines multifunktionalen Funktionsträgers mit einer steifen Trägerstruktur, in welcher Bedienungselemente und/oder Anzeigeelemente hinter einer über im wesentlichen den gesamten Funktionsträger geschlossenen, transparenten Oberflächenschicht angeordnet sind. Das Verfahren ist dabei insbesondere dadurch gekennzeichnet, dass wenigstens folgende Schritte durchlaufen werden:
i) eine flache, flexible und vorzugsweise wenigstens bereichsweise transparente Kunststofffolie mit einer Dicke im Bereich von 0.05-0.4 oder 0.1-0.4 mm wird vorgelegt indem sie von Rolle zugeführt wird, und in diese bevorzugtermassen ein Mittel zur Positionierung in einer Spritzgussform, beispielsweise in Form wenigstens einer Positionsmarke, aufgebracht wird;
ii) die flache Kunststofffolie wird positionsgenau, zum Beispiel unter Verwendung der wenigstens einen Positionsmarke (auch eine Vielzahl von derartigen Marken ist möglich), in eine Spritzgussform eingelegt, und die Kunststofffolie wird unter Ausbildung eines im wesentlichen zusammenhängenden harten Kunststoffträgers auf der ersten Seite hinterspritzt, wobei die Spritzgussform derart ausgestaltet ist, dass im Bereich der Bedienungselemente und/oder Anzeigeelemente wenigstens bereichsweise die Kunststofffolie nicht hinterspritzt wird und freiliegend in Form von wenigstens einer oder zwei Aussparungen verbleibt;
iii) auf der der ersten Seite abgewandten zweiten Seite wird die Kunststofffolie in der gleichen oder nach Übertragung des Rohlings in eine weitere Spritzgussform in dieser weiteren Spritzgussform im wesentlichen vollflächig mit einer transparenten härtenden (selbsthärtend, härtend in Anwesenheit von separatem Härter, und/oder wärmehärtend) Vergussmasse in einem RIM-Verfahren (Reaction injection moulding) überflutet und unter Ausbildung einer geschlossenen transparenten Oberflächenschicht mit einer Dicke von über im wesentlichen den gesamten Funktionsträger wenigstens 0.1 mm beschichtet wird, wobei sich im Bereich der Aussparungen wenigstens bereichsweise flexible Membranbereiche ausbilden (dabei ist es auch möglich, dass nach der Injektion der Vergussmasse die Form etwas weiter geschlossen wird, so dass eine sehr dünne Schicht aus Vergussmasse möglich ist);
iv) in die Aussparungen werden Bedienungselemente und/oder Anzeigeelemente eingelegt und mit dem Kunststoffträger verbunden.

Eine erste bevorzugte Ausführungsform dieses Verfahrens ist dadurch gekennzeichnet, dass die Kunststofffolie vor, während oder nach Schritt i), vorzugsweise auf der ersten und/oder der zweiten Seite, bedruckt und/oder dekoriert wird, vorzugsweise in einem Siebdruckverfahren, einem Laserdruckverfahren, einem Stempeldruckverfahren, einem Spraydruckverfahren, einem Offsetdruckverfahren oder einen Digitaldruckverfahren.-Beim Durchziehen der Rolle durch das Spritzgusswerkzeug wird mit aufgedruckten Positioniermarken positioniert. Auf der (TPU) Rolle werden z.B. zu jedem Bild links und rechts je eine Positioniermarke aufgedruckt in schwarzer Farbe. Links für die Längsausrichtung z.B. ein quadratisches Kästchen, rechts für die Seitenausrichtung ein länglicher Balken. Diese Positionsmarken werden von je einem optischen Sensor im Spritzgusswerkzeug erkannt und dann die Rolle mittels Vorschub und Seitenkorrektur automatisch richtig positioniert für jedes einzelne Bild. Diese Marken können in diesem Bedruckungsschritt aufgebracht werden. Die Positionierung kann zusätzlich mit vorgängig gestanzten Positionslöchern erfolgen.

Alternativ oder zusätzlich ist es gemäß einer weiteren bevorzugten Ausführungsform möglich, nach Schritt ii) den Rohling wenigstens bereichsweise zu bedrucken, vorzugsweise unter Verwendung eines der oben genannten Verfahren, und/oder zu dekorieren. Alternativ ist es möglich, den Rohling einer Laserbeschriftung zu unterziehen. Die Beschriftung in dieser Phase des Herstellungsverfahrens ist insbesondere dann vorteilhaft, wenn im Rahmen des Hinterspritzens nicht sichergestellt werden kann, dass die Folienposition exakt genau über den zukünftigen Positionen der Schaltelemente/Displayelemente angeordnet ist.

Eine weitere bevorzugte Ausführungsform ist dadurch gekennzeichnet, dass die Kunststofffolie durch den Schritt ii) wenigstens bereichsweise in eine dreidimensionale Oberflächenform übergeführt und in dieser stabilisiert wird. Mit anderen Worten kann im Rahmen des Schrittes ii) die Folie entweder in ihrer Flachlage verbleiben, sie kann aber auch entweder durch ihre Einlage in die Spritzgussform in einer entsprechend geformten Weise oder durch den eigentlichen Prozess des Hinterspritzens in eine dreidimensionale Oberflächenform gebracht werden.

Bevorzugtermassen handelt es sich beim Bedienungselement um wenigstens einen Schalter mit taktiler Rückmeldung.

Eine weitere bevorzugte Ausführungsform ist dadurch gekennzeichnet, dass es sich beim Anzeigeelement um ein LCD-Display, vorzugsweise um ein (resistives oder kapazitives) berührungsempfindliches Display handelt.

Eine weitere bevorzugte Ausführungsform ist dadurch gekennzeichnet, dass der Funktionsträger sowohl wenigstens ein Bedienungselement in Form eines Schalters mit taktiler Rückmeldung als auch wenigstens ein Anzeigeelement, vorzugsweise ein resistives oder kapazitives berührungsempfindliches Anzeigeelement, aufweist.

Eine weitere bevorzugte Ausführungsform ist dadurch gekennzeichnet, dass es sich bei der Kunststofffolie um eine Kunststofffolie aus TPE, TPU (thermoplastische Polyurethan-Elastomere) oder aus Polyamid handelt, vorzugsweise aus Polyamid 6 oder Polyamid 12, TPU. Eine bevorzugte Ausführungsform ist generell dadurch gekennzeichnet, dass die Kunststoffolie eine Dicke im Bereich von 150-300 µm, vorzugsweise im Bereich von 150-225 µm aufweist.

Eine weitere bevorzugte Ausführungsform ist dadurch gekennzeichnet, dass es sich bei der Vergussmasse zur Bildung der Oberflächenschicht um ein transparentes, in Anwesenheit eines Härters, selbsthärtendes und/oder wärmehärtendes Polyurethanharz handelt, wobei dieses wenigstens im Bereich der Bedienungselemente und der wenigstens teilweise darum herum angeordneten Membranbereiche eine Dicke von nicht mehr als 0.4 mm aufweist, und wobei vorzugsweise in diesen Bereichen die Oberflächenschicht eine Dicke von wenigstens 0.2 mm aufweist.

Generell erweist es sich gemäß einer bevorzugten Ausführungsform als vorteilhaft, wenn das verwendete Herstellungsverfahren dadurch gekennzeichnet ist, dass die Kunststofffolie, vorzugsweise in bereits auf der Vorderseite und/oder der Rückseite bedruckter Form, ab Rolle zugeführt respektive auch wieder abgeführt wird (abgesehen von den ausgeschnittenen Bereichen) und in einem ersten Bearbeitungsschritt in einer ersten Spritzgussform unter Ausbildung des harten Kunststoffträgers hinterspritzt wird. Vorzugsweise wird dabei die Kunststofffolie vor dem Schließen der Form über konvexe Formbereiche diese bedeckend gespannt und/oder an konkave Formbereiche unter Verwendung von Unterdruck angelegt (indem entsprechende Vakuumkanäle in der Form angelegt sind), und anschließend im Randbereich, vorzugsweise umlaufend, geklemmt wird, und dann die Form geschlossen wird.

Dabei kann es vorteilhaft sein, wenn beim Schließen und/oder beim Öffnen der Form (die Kunststofffolie auf eine Umlaufkontur gleich automatisch zugeschnitten wird.

Nach dem ersten Bearbeitungsschritt kann der resultierende Rohling auf der dem harten Kunststoffträger gegenüberliegenden Seite der Kunststofffolie mit der transparenten härtenden Vergussmasse überflutet werden, wobei vorzugsweise der Rohling der ersten Spritzgussform, vorzugsweise unter Zuhilfenahme eines Auswerfers entnommen wird, und in eine zweite Form eingelegt wird, und in dieser die härtende Vergussmasse unter Ausbildung der transparenten Oberflächenschicht angespritzt wird. Dabei wird bevorzugter Massen anschließend die umlaufende endgültige Bauteilkontur unter Ausbildung des Bauteils zugeschnitten.

Das Bauteil kann anschließend durch Ergänzung mit weiteren Funktionselementen, insbesondere Schnappscheiben, Leiterplatten, Beleuchtungselementen, fertig gestellt werden.

Des weiteren betrifft die vorliegende Erfindung auch einen multifunktionalen Funktionsträger mit wenigstens einem Bedienungselement und vorzugsweise wenigstens einem Anzeigeelement, gekennzeichnet durch eine mit einem zusammenhängenden harten Kunststoffträger bis auf wenigstens einer oder zwei Aussparungen auf einer ersten Seite direkt und unmittelbar hinterspritzte Kunststofffolie einer Dicke im Bereich von 0.05-0.4 oder 0.1-0.4 mm, die auf der gegenüberliegenden zweiten Seite eine unmittelbare, im wesentlichen geschlossene transparente Oberflächenschicht aus einer gehärteten Vergussmasse aufweist. Dabei ist in wenigstens einer der Aussparungen wenigstens ein Bedienungselement in Form eines Schalters, vorzugsweise mit taktiler Rückmeldung, angeordnet, um welchen herum ein wenigstens teilweise umlaufender flexibler Membranbereich zur Ermöglichung des Tastenhubs vorhanden ist, bei welchem der flexible Schichtaufbau nur aus aus gegebenenfalls bedruckter Kunststofffolie und Oberflächenschicht besteht.

Eine erste bevorzugte Ausführungsform eines solchen Funktionsträgers ist dadurch gekennzeichnet, dass er in einem Verfahren, wie es oben geschildert worden ist, hergestellt ist.

Eine weitere bevorzugte Ausführungsform des Funktionsträgers ist gekennzeichnet, dass er zudem wenigstens ein Anzeigeelement aufweist, und dass das wenigstens eine Bedienungselement und das wenigstens eine Anzeigeelement bevorzugt auf einer gemeinsamen Leiterplatte befestigt sind, welche am harten Kunststoffträger insbesondere bevorzugtermassen befestigt ist. Dabei sind vorzugsweise sämtliche Bedienungselemente und Anzeigeelemente des gesamten Funktionsträgers auf einer einzigen gemeinsamen Leiterplatte angeordnet.

Gemäß einer weiteren bevorzugten Ausführungsform sind auf der Oberfläche, insbesondere in den Bereichen der Bedienungselemente über die Oberfläche wenigstens teilweise hervorstehende Bereiche aus der Vergussmasse ausgebildet. In den genannten Membranbereichen verbleiben aber die oben angegebenen Dicken der Oberflächenschicht, um die genügende Beweglichkeit für die taktile Rückmeldung bei den Schaltern zu gewährleisten.

Der Hartkunststoffträger und/oder die Leiterplatte, auf welcher Bedienungselemente und/oder Anzeigeelemente angeordnet sind können Lichtleiter, Lichtquellen, und/oder Lichtabschirmungen aufweisen.

Bei einem solchen Funktionsträger kann es sich um ein integrales oder einen Teil eines Konsolenelements für ein Fahrzeug, um ein Lenkrad für ein Fahrzeug, um eine Medizinalvorrichtung, um eine Computermaus, um eine Spielkonsole oder um eine Oberfläche für ein Mobiltelefon oder ein Tischtelefon handeln.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen schematischen Schnitt durch einen Funktionsträger nach der Erfindung, zum Beispiel entlang der Linie A-A einer Konstruktion gemäß Figur 3;
- Fig. 2: eine Darstellung der einzelnen Verfahrensschritte des vorgeschlagenen Verfahrens;
- Fig. 3: ein Beispiel einer Blende einer Automobil-Mittelkonsole;

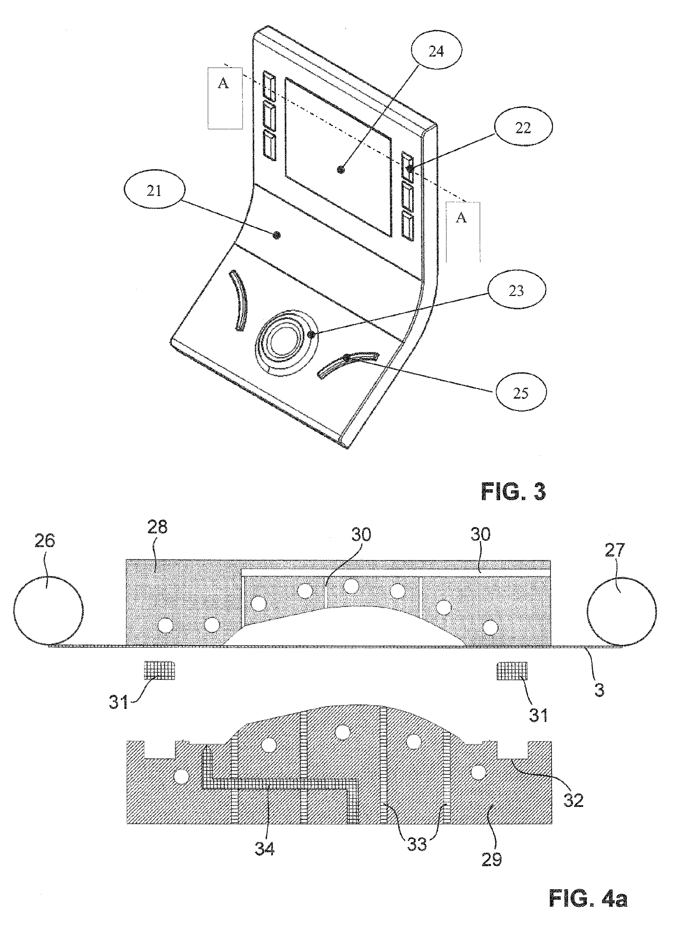

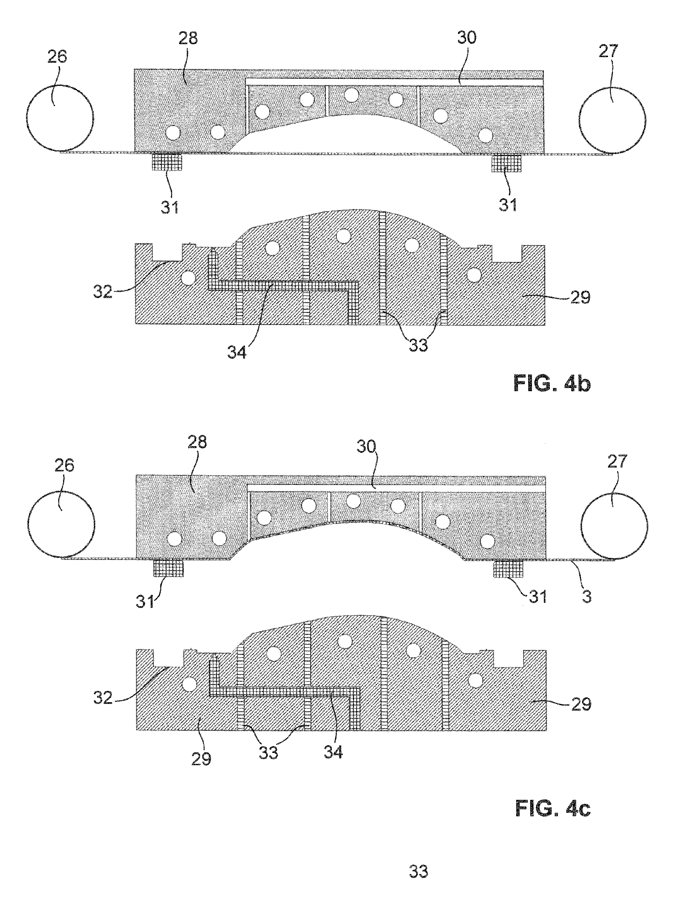

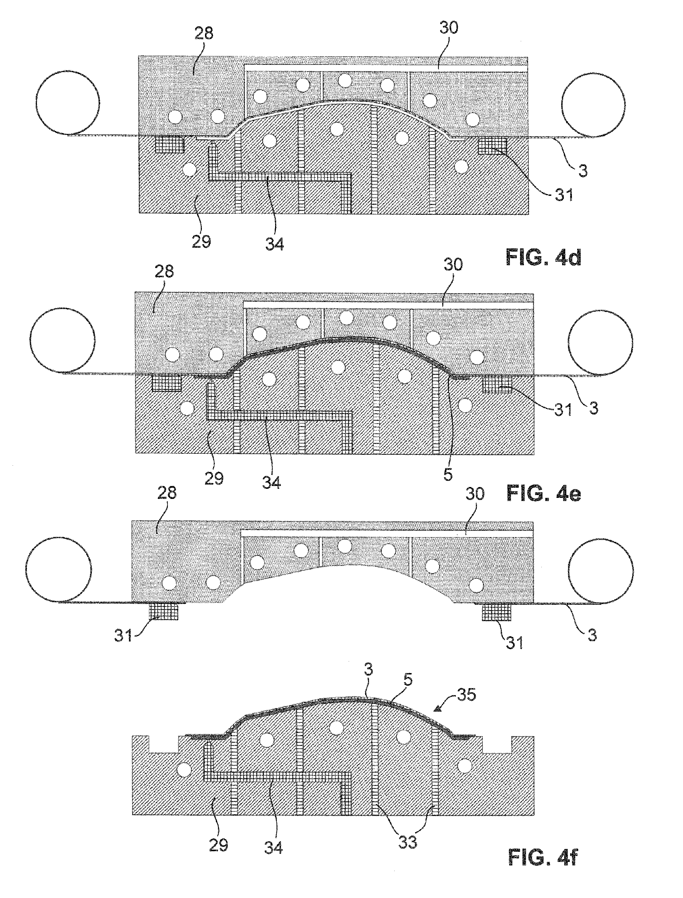

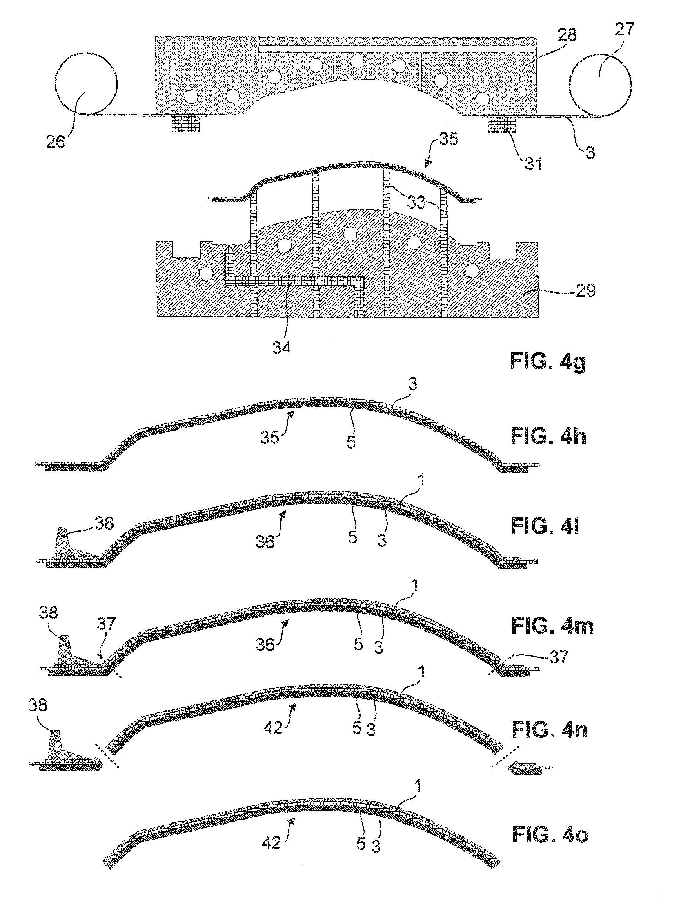

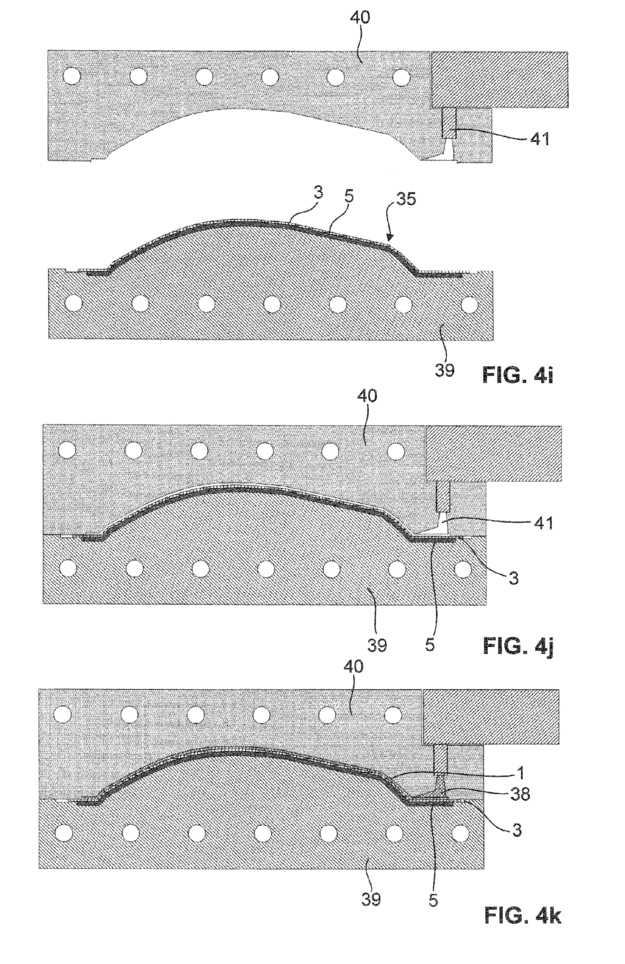

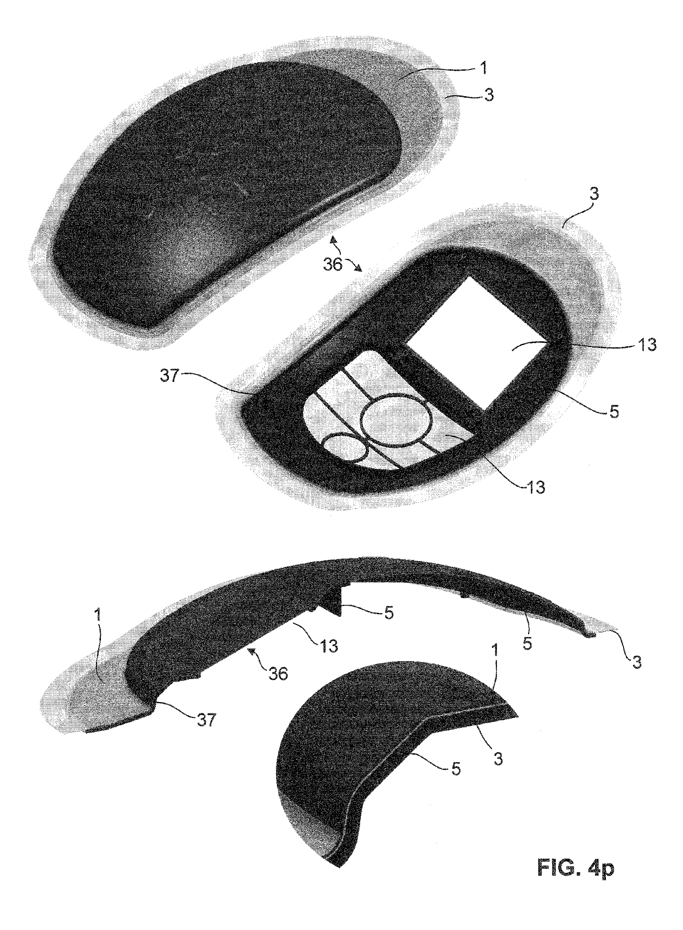

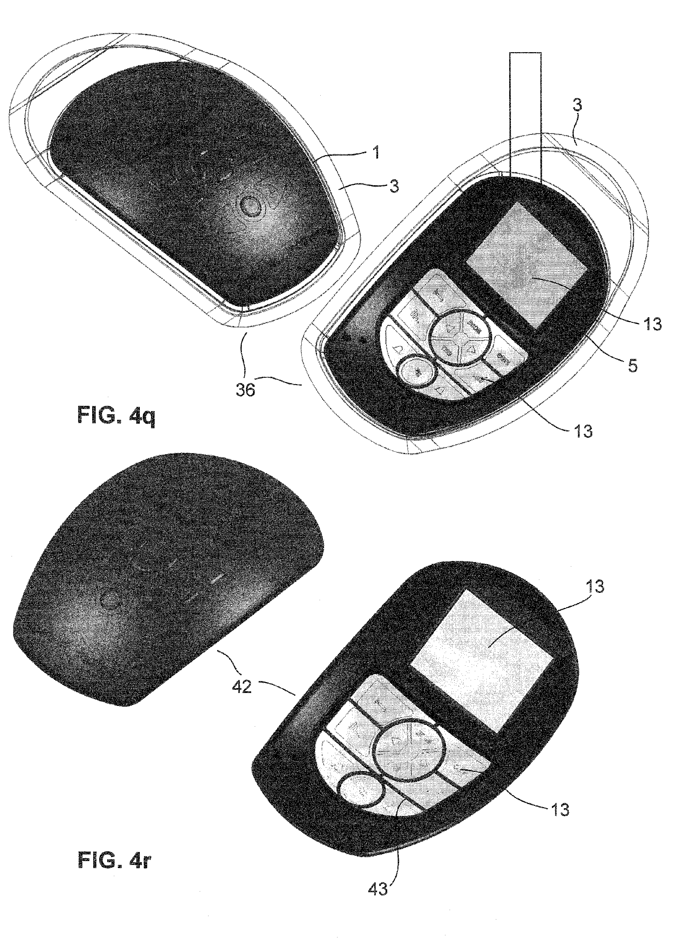

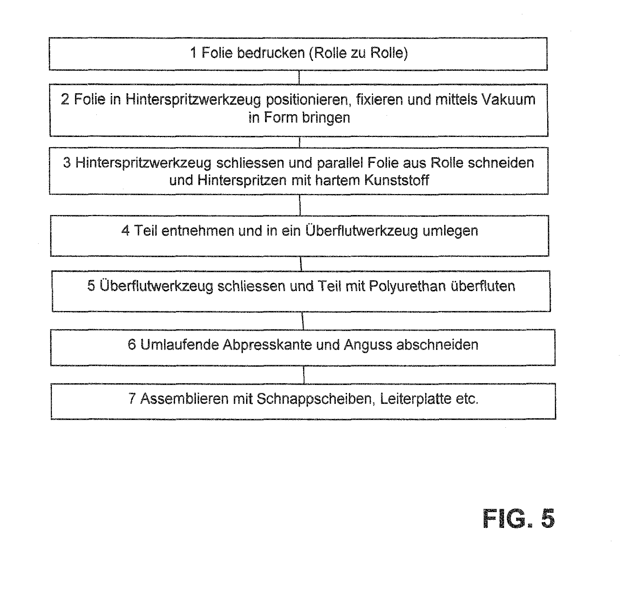

- Fig. 4: die unterschiedlichen Verfahrensschritte respektive Verfahrensresultate eines bevorzugte Herstellungsverfahrens, wie es schematisch auch in den Schritten gemäß Figur 5 dargestellt ist, wobei in a) die offene Form mit zugeführter Kunststofffolie, in b) die offene Form mit angelegter Kunststofffolie, in c) die offene Form mit an die Formkontur angelegter Kunststofffolie, und in d) die geschlossene Form dargestellt ist, in e) die geschlossene Form mit gespritzten Kunststoffträger und in f) die wieder geschlossene Form dargestellt ist, in g) die offene Form gerade bei der Entnahme des Rohlings dargestellt ist und in h) eine Schnittdarstellung des Rohlings angegeben ist; in i) wird im Rahmen des Zweiten Bearbeitungsschritte die offene Form mit eingelegtem Rohling dargestellt, in j) die geschlossene Form, in k) die geschlossene Form mit gefluteter Vorderseite, und l) den entsprechenden Rohling darstellt, m) den Rohling mit den zugehörigen Schnittstellen, n) den Rohling mit abgetrennten Randbereich und o) das zugeschnittene Bauteil, und wobei p) das noch nicht zugeschnittene Bauteil in unterschiedlichen perspektivischen n (oben) und Schnittdarstellungen (unten) darstellt, q) ein weiteres Bauteil in derartigen Ansichten und r) ein zugeschnittenes Bauteil aber noch ohne eingesetzte Funktionsbauteile; und
- Fig. 5: ein Flussdiagramm eines Herstellungsverfahrens.

### BESCHREIBUNG BEVORZUGTER AUSFÜHRUNGSFORMEN

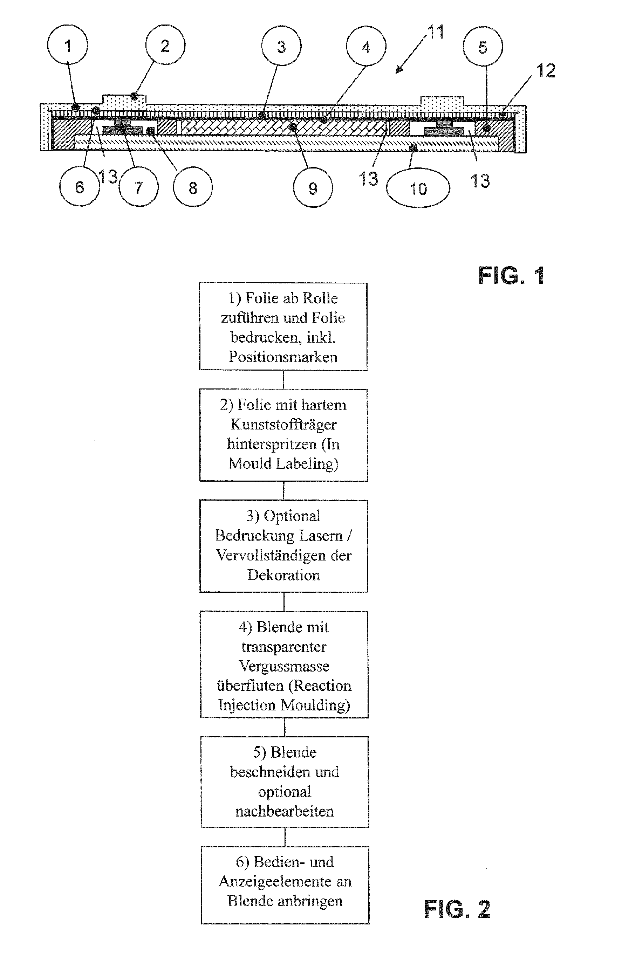

Fig. 3 zeigt ein Beispiel einer Blende einer Automobil-Mittelkonsole, Fig. 1 zeigt einen schematischen Schnitt durch einen solchen Funktionsträger nach der Erfindung entlang der Linie A-A einer Konstruktion gemäß Figur 3, und Fig. 2 eine Darstellung der einzelnen Verfahrensschritte des vorgeschlagenen Verfahrens. Die einzelnen Schritte dieses Verfahrens sollen nun wie folgt erläutert werden:
Schritt 1 aus Figur 2: Auf die von Rolle zugeführte eine weiche Folie 3 (z.B. TPU 200um Dicke) wird die Folie 3 auf der Vorder- und/oder oder Rückseite bedruckt und dekoriert, wobei zusätzlich Positioniermarken 12 aufgedruckt werden. Auf der TPU Rolle werden zu jedem Bild links und rechts je eine Positioniermarke aufgedruckt in schwarzer Farbe. Links für die Längsausrichtung ein quadratisches Kästchen, rechts für die Seitenausrichtung ein länglicher Balken.. In der Schnittdarstellung gemäss Figur 1 ist auch im fertigen Bauteil 11 die Positioniermarke 12 noch vorhanden, dies an einer Stelle, wo es z.B. unproblematisch ist, dass dieses Marke 12 vorhanden ist. Häufig sind solche Positionierungshilfen aber spezifisch am Rand der Folie 3 angeordnet, und zwar in einer Weise, dass dann die Positioniermarke 12 oder die Positioniermarken 12 im Rahmen der Nachbearbeitung (Schritt 5 nach Figur 2) entfernt werden und im fertigen Bauteil nicht mehr enthalten sind.

Die Folie 3 wird im Rahmen des Schrittes 2 aus Figur 2 dann an den Positionsmarken 12 orientierend positioniert. Diese Positionsmarken 12 werden von je einem optischen Sensor im Spritzgusswerkzeug erkannt und dann die Rolle mittels Vorschub und Seitenkorrektur automatisch richtig positioniert für jedes einzelne Bild. Damit wird die Folie in das Spritzgusswerkzeug eingelegt und ein harter Kunststoffträger 5 hinterspritzt. Beim Material dieses Kunststoffträgers 5 kann es sich um Polyamid, Polycarbonat oder auch ABS handeln. In den Bereichen der Bedien- und Anzeigeelemente wird die Folie 3 nicht hinterspritzt, d.h. es verbleiben für diese Aussparungen 13, und die Schichtkonstruktion aus Folie 3 und Oberflächenschicht 2 bildet dort eine flexible und elastische Haut im Sinne einer Membran 6.

Die Folie 3 auf dem Kunststoffträger 5 kann dann im Rahmen des Schrittes 3 aus Figur 2 nochmals (oder erstmals) dekoriert werden, z.B. können Symbole positionsgenau aus der Bedruckung gelasert werden oder andere Elemente können aufgedruckt werden z.B. im Tampondruckverfahren.

In einem nächsten Schritt gemäß Ziffer vier aus Figur 2 wird der Kunststoffträger 5 mit Folie 3 in einem Werkzeug positioniert, das Werkzeug geschlossen, wobei zwischen Folienoberseite und Werkzeug ein Spalt von mindestens 0.1mm verbleibt. Dieser Spalt wird typischerweise unter Hochdruck (Niederdruckverfahren auch möglich) mit einer reaktiven PUR Vergussmasse gefüllt, d.h. auf einer PUR Hochdruckanlage mit klarem, d.h. im wesentlichen transparentem oder wenigstens durchscheinendem Polyurethan. Nachdem das Polyurethan ausgehärtet ist (zusätzlich ist Wärmeeintrag möglich), wird bevorzugtermassen die Blende noch nachgearbeitet werden z.B. beschnitten (umlaufende Folie und Anguss etc) und evt. noch poliert. Dann können von hinten Bedien- 7 und Anzeigeelemente 9 montiert werden, wobei dies bevorzugtermassen so erfolgt, dass eine Leiterplatte 10 mit auf diesen montierten Elemente 7 und 9 von hinten eingeschoben und an der Struktur 5 befestigt wird.

Transparente Vergussmasse 1 mit angeformten Tastenerhebungen 2 oder Zierelementen: Die Vergussmasse für die Erstellung der Oberflächenschicht 1 ist der wichtigste Werkstoff dieser Erfindung. Sie dient zum einen dazu, eine im wesentlichen beliebige dreidimensionale Oberflächenstruktur zu generieren (Abbild der Werkzeugoberfläche). Zum anderen können mit der Vergussmasse wesentlichen beliebige Strukturen auf der Oberfläche angebracht werden wie Tastenformen oder Zierstege etc,. Typischerwiese geschieht dies innerhalb einer minimalen Dicke an der dünnsten Stelle von 0.1 - 2.0 mm. Diese Oberflächenschicht 1 kann durchgehend über die ganze Oberfläche sein oder auch nur in Teilbereichen. Die Oberflächenschicht 1 hat folgende Eigenschaften:
- elastisch um im dünnen Membranbereich 6 eine Betätigung der Tasten 2/7 zu ermöglichen;
- fest im dicken Tastenbereich 2 um ein hartes Gefühl zu geben;
- transparent im Rahmen der aufgetragenen Dicke, um Dekoration sichtbar zu machen;
- gute Haftung auf Folie;
- gute Abriegbeständigkeit;
- hohe Kratzfestigkeit;
- kein Vergilben, auch nicht unter starker Sonneneinstrahlung;
- geruchsneutral und emissionsfrei

Die Vergussmasse hat im Membranbereich 6 der Tasten normalerweise eine Dicke von 0.1mm bis 0.3mm, um die Betätigung der Taste mit taktiler Rückmeldung zu ermöglichen. In den anderen Bereichen fühlt sich die Oberfläche hart an wegen der harten Kunststoffhinterspritzung 5, der harten dahinterliegenden Displayelemente 9, oder der dicken Tastenbereiche 2.

Die Härte der Vergussmasse kann durch das Mischungsverhältnis von Härter zu Lack eingestellt werden. Normalerweise wird bevorzugt, dass die Härte im Bereich von 70-100 Shore A liegt, oder im Bereich von 80 - 100 Shore D, bevorzugt 80 - 85 Shore D. Insbesondere bevorzugt im Bereich von 80 Shore A

Diese Membrane 6 im Tastenbereich ermöglicht eine taktile Rückmeldung der Tasten 7 und das bei einer über das gesamte Bauteil geschlossenen 3-dimensionalen Oberfläche 1.

Als hervorragend geeignetes Vergussmassen-Material hat sich Polyurethan bewährt. Das Polyurethan wird mittels Hoch- oder Niederdruck Reaction Injection Moulding (RIM) auf die Blende aufgebracht, wobei sich automatisch eine innige Verbindung zwischen der Kunststofffolie 3 und der Oberflächenschicht 2 ausbildet. Dabei gibt es 3 mögliche Vorgehensweisen:
1. direkt nach dem Hinterspritzen auf der gleichen Maschine in zweiter Form mit Vergussmasse Überfluten, Vorteil ist, dass die Blende bereits sauber positioniert ist.
2. als separaten Schritt Blende in ein RIM Werkzeug einlegen, wo dann der Spalt für den Oberflächenüberzug und die Tasten, Zierstege etc mit Polyurethan unter Ausbildung der Oberflächenschicht 1/2 überflutet werden. Minimale Schichtdicke ist 200um, um die Form füllen zu können
3. wie 2. aber nach dem Füllen der Form wird noch mittels einem Prägedruck die Schichtdicke weiter reduziert auf 100um (0.1mm).

Es kann ein Formtrennmittel vorteilhaft sein.

Nach dem Überfluten wird bevorzugtermassen die Blende nachbearbeitet zum Beispiel zugeschnitten (Folie und Anguss). Allenfalls muss der transparente Vergussmasse auch noch nachpoliert werden.

Kunststofffolie 3: Die Folie sollte folgende Eigenschaften aufweisen:
- verformbar und hinterspritzbar;
- flexibel und weich, um die Tastenfunktion (Hub) zu gewährleisten;
- bedruckbar für Dekoration;
- transparent für Hinterleuchtung und Anzeigeelemente / Displaybereiche;
- gute (nachhaltige) Haftung zu Oberflächenschicht;
- gute (nachhaltige) Haftung zur harten Trägerstruktur

Die Folie 3 besteht bevorzugt aus einer 50 - 300um dicken TPU Folie. Dabei kann das TPU aliphatisch oder nicht-aliphatisch sein. 200um ist eine bevorzugte Dicke.

Die Härte der Folie 3 ist bevorzugtermassen ähnlich wie bei der Vergussmasse im Bereich von 70-100 Shore A, oder 80 - 100 Shore D, bevorzugt 80 - 85 Shore D. Insbesondere bevorzugt im Bereich von 80 Shore A.

Um eine bessere Haftung gegenüber der Hinterspritzung 5 zu erzielen, kann die Folie 3 mit Alkohol gereinigt, mit Plasma, Corona oder Flamme vorbehandelt werden oder eine co-extrudierte Olefinschicht enthalten.

Alternativ sind auch andere Materialien denkbar wie Polyamid PA oder TPE etc

Dekoration 4: Die Folie 3 kann auf der Vorder- oder auf der Rückseite bedruckt werden (zum Beispiel Siebdruck). Symbole können bereits auf der Folie aufgebracht werden. Allerdings kann es beim Hinterspritzen der weichen Folie 3 zu unkontrollierbarem Verzug der Symbole und deren Position kommen, sodass folgendes Vorgehen bevorzugt wird:
1. Bedrucken der Folie auf der Vorderseite mit Symbolfarben (z.B. weiss);
2. Bedrucken der Folie mit Oberflächenfarbe (z.B. schwarz);
3. Hinterspritzen der bedruckten Folie;
4. Lasern der Symbole am Hinterspritzen Bauteil, dadurch stimmen Geometrie und Position.

Das Verfahren kann auch mit auf der Rückseite bedruckter Folie 3 angewendet werden, allerdings wird dann nur mit Oberflächenfarbe bedruckt und die Symbole von hinten gelasert und allenfalls noch mit Symbolfarbe im Tampondruck gefüllt.

Harter Kunststoffträger 5: Der Träger 5 muss folgende Funktionen erfüllen:
1. feste Basis für Folie 3, um in den Bereichen ohne Tasten eine möglichst harte und feste Oberfläche zu erzeugen;
2. gute Haftung zur Folie 3;
3. offene Fenster im Bereich der flexiblen Membrane 6;
4. offene Fenster im Bereich der Anzeigeelemente /Displays 9 ausser es wird ein transparentes Material verwendet oder ein Zweikomponenten-Verfahren mit einer transparenten Komponente;
5. Befestigungsmöglichkeiten für Bedien- und Anzeigekomponenten respektive einer Leiterplatte 10 mit diesen Elementen auf der Rückseite;
6. Befestigungsmöglichkeiten zur Integration der Blende in das Fahrzeug / Gerät.

Zum Hinterspritzen der TPU Folie 3 wird bevorzugt ABS/PC Kunststoff verwendet, es können aber auch PA6 oder ABS/PA oder ähnliche Systeme eingesetzt werden.

Die Wandstärke ist wesentlichen abhängig von der Bauteilgrösse und der Einbautiefe.

Flexibler Membranbereich ohne Kunststoffhinterspritzung 6: Um bei den Bedienelementen 7 eine taktile Rückmeldung zu ermöglichen oder ein resistives Display 9 zu betätigen, wird eine Membrane 6 benötigt. Diese Membrane 6 besteht nur aus der dekorierten Folie 3 und der Vergussmasse der Oberflächenschicht 1. Die Dicke der Membrane 6 ergibt sich aus der Dicke der Folie 3 und der Dicke der Vergussmasse der Oberflächenschicht 1 im MembranBereich. Diese Gesammtdicke sollte 600um nicht überschreiten, weil sonst normalerweise kein scharfes taktiles Schaltgefühl mehr möglich ist.

In diesem Membranbereich 6 ist die Folie 3 nicht hinterspritzt (Fenster/Aussparung).

Die Länge der Membrane (Abstand Rand der angeformten Taste 2 zur Hinterspritzung 5) sollte im Bereich von 2-10 mm, vorzugsweise im Bereich von 4-6 mm, typischerweise ca. 5 mm betragen, ist aber abhängig von der Tastengeometrie und dem zu erzielenden Schaltgefühl.

Mikroschalter / Schnappscheiben 7: Um eine taktile Rückmeldung der Tastenbetätigung zu erhalten, wird ein Mikroschalter 7 oder eine Schnappscheibe unter der Taste 2 angebracht. Betätigungskraft und Snap kann durch Auswahl der Schnappscheibe beinflusst werden.

Es ist einer der ganz grossen Vorteile und Alleinstellungsmerkmale dieser Erfndung, dass ein taktiles Tastengefühl in einer geschlossenen Blendenoberfläche erzeugt werden kann.

Es sind aber auch resistive (Silikonschaltmatte anstelle Mikroschalter) und kapazitive Tasten realisierbar oder die Kombination von diesen Technologien.

Hinterleuchtung 8: Die Hinterleuchtung der Tasten oder Ausleuchtung einzelner Flächen oder Funktionsbeleuchtung kann mittles normalen LEDs und oder Lichtleitern realisiert werden. Es ist aber auch möglich, bei flachen Strukturen eine Lichtleitfolie oder EL Folien zu verwenden.

Anzeigeelemente / Displays 9: Displays können an dem Kunststoffträger befestigt werden. Es ist möglich dank der dünnen und flexiblen Schicht 1/3 über dem Display 9 auch resistive Touscreens einzusetzen sowie auch kapazitive Touchscreens.

Leiterplatte 10: Die Leiterplatte dient als Aufnahme für die Bedien- 7 und Anzeigeelemente 9. Dabei kann eine starre, flexible oder Starr-flex Leiterplatte 10 eingesetzt werden. Bei extremen Oberflächenwölbungen sind auch 3D MID Technologie und ähnliches möglich.

Die Leiterplatte 10 kann mittels Schrauben, kleben, oder Snapp-on Verbindungen an der Kunstoffhinterspritzung direkt an der Blende befestigt werden.

Im Rahmen der Figuren 4 und 5 wird ein Herstellungsverfahren für ein solches Bauteil im Detail dargestellt. Dabei wird in einem ersten Verfahrensschritt die Kunststofffolie 3 mit dem harten Kunststoffträger 5 hinterspritzt, und zwar in einer ersten Spritzgussform, und in einem anfolgenden zweiten Herstellungsschritt wird auf der Vorderseite der Kunststofffolie 3 die transparente Vergussmasse in einer zweiten Form direkt angespritzt.

Konkret ist in Figur 4a die offene erste Spritzgussform dargestellt mit einer oberseitigen Spritzgussform 28, die die Schliessseite darstellt und die insbesondere die konkave Formgestaltung aufweist. In der Form sind Vakuumkanäle 30 angelegt, die in diesem konkaven Bereich münden. Die von einer Zuführrolle 26 zugeführte Kunststofffolie 3, die hinter der Form auf einer Aufwickelrolle 27 wiederaufgenommen wird, wird über diese obere Spritzgussform 28 gelegt.

Unterhalb ist ein umlaufender Spannrahmen 31 vorgesehen. Noch weiter unterhalb ist die untere Spritzgussform 29 vorgesehen, die eine der konkaven Form in der Spritzgussform 28 entsprechende konvexe Form aufweist, und die in diesem Fall die Zuführungsleitung 34 für den harten Kunststoff aufweist. In dieser Form ist zudem auch eine umlaufende Nut 32 zur Aufnahme des Spannrahmens vorgesehen.

Wie dies in Figur 4b dargestellt ist, wird die Folie vorgeschoben und anschliessend gegen einen flachen Bereich der oberen Spritzgussform 28 durch den Spannrahmen 31 angepresst. Im nun anfolgenden Schritt wird über die Leitung 30 ein Vakuum angelegt, und die elastische Folie 3 wird nun in den konkaven Bereich hineingesaugt und liegt, wie dies in Figur 4c dargestellt ist, in dieser konkaven Form glatt an deren Oberfläche an.

Anschliessend wird nun, wie dies in Figur 4d dargestellt ist, die Form geschlossen. Sobald die Form geschlossen ist wird über den Kanal 34 der Kunststoff, der anschliessend die harte Schicht 5 hinter der Kunststofffolie 3 ausbildet, zugeführt. Noch in der Form härtet der Kunststoff aus. Anschliessend wird die Form wieder geöffnet, die geöffnete Form ist in Figur 4f dargestellt. Es ist übrigens möglich, die Kunststofffolie 3 gleich beim Schliessen (Figur 4d) in die entsprechende umlaufende Kontur zu zuschneiden, oder einen entsprechenden automatischen Schnittmechanismus beim Öffnen der Form (vgl. Figur 4f) vorzusehen.

Nun liegt gemäss Figur 4f der Rohling 35 auf der unteren konvexen Form auf, und um diesen Rohling 35 sauber entnehmen zu können sind vorzugsweise in der unteren Spritzgussform 29 Auswurfstifte 33 vorgesehen, die nun nach oben geschoben werden, so dass der Rohling 35 nun ohne weiteres entnommen und in die zweite Form eingelegt werden kann. Wie sich dies insbesondere aus Figur 4h erschliesst, ist dieser Rohling nach dem ersten Bearbeitungsschritt ein zweischichtiger Aufbau mit auf der Oberseite der transparenten Kunststofffolie 3 und auf der unteren Seite der harten Kunststoffstruktur, die Aussparungen aufweist, wie dies bereits vorgängig diskutiert wurde.

Dieser Rohling 35 wird nun in eine zweite Form eingelegt, wie sie im offenen Zustand in Figur 4i dargestellt ist. Sie wird auf den entsprechenden konvexen Teil der unteren Form 36 auf resp. eingelegt, und anschliessend wird die Form geschlossen, wie dies in Figur 4j dargestellt ist. Nun wird über einen Zuführungskanal 31 die Vergussmasse zugeführt und auf der dem harten Bereich 5 abgewandten Seite der Folie 3 angespritzt. Das Resultat ist mit geschlossener Form in Figur 4k dargestellt. Dieser dann resultierende Rohling mit hinterspritzter und auf der anderen Seite gefluteter Folie ist in Figur 4i dargestellt in einer Schnittdarstellung, dieser Rohling 36 wird nun der zweiten Bearbeitungsform entnommen. Er weist in seinem Randbereich noch weit überstehende Bereiche und insbesondere typischerweise einen Angussüberrest 38 auf. Dieser wird nun an den vorgesehenen umlaufenden Schnittstellen 37 abgetrennt, so dass, wie dies in den Figuren 4m und 4n dargestellt ist, ein endgültiges Bauteil 42 entsteht, das die gewünschte Umlaufkontur hat, und in Figur 4o ebenfalls in einer Schnittdarstellung angegeben ist.

In Figur 4p ist im oberen Bereich ein mögliches derartiges Bauteil noch als Rohling 36 dargestellt, d.h. die überstehenden Randbereiche aus Folie und/oder transparenter Vergussmasse und/oder hartem Kunststoffträger sind noch nicht abgeschnitten.

Eine weitere etwas andere Bauweise ist in Figur 4q dargestellt, wiederum in perspektivischen Ansichten von oben (links) und von unten (rechts). Hier können die unterschiedlichen Aussparungen sehr schön erkannt werden, sowie die auf der Oberfläche der Vergussmasse vorgesehenen Erhebungen zur Ausbildung von taktilen Knopfbereichen. In Figur 4r ist das fertige Bauteil dargestellt wo die Randkontur bereits abgeschnitten ist, und auch hier können die Aussparungen 13 sehr schön erkannt werden, gegebenenfalls erforderliche Stege 43. Diese Stege 43 können in dem hier beschriebenen Herstellungsverfahren gerade ganz besonders filigran und trotzdem gut tragend ausgebildet werden, da sie direkt an die transparente Folie angespritzt werden.

Figur 5 zeigt die einzelnen Schritte nochmals in einer Übersichtsdarstellung. In einem ersten Schritt wird die bedruckte Folie von Rolle zu Rolle bedruckt, und zwar entweder auf der Oberseite oder auf der Unterseite, oder beides, es ist auch zusätzlich möglich, gegebenenfalls bereits hier gewisse Prägungen an der Folie vorzusehen.

In einem zweiten Schritt wird die Folie, wie dies in Figur 4a dargestellt ist, im Hinterspritzwerkzeug positioniert, fixiert und mittels Vakuum dann in die konkaven Bereiche der Form gesaugt und angelegt.

Im dritten Schritt wird das erste Werkzeug geschlossen und vorzugsweise parallel die Folie aus der Rolle geschnitten, und in der Form wird mit dem harten Kunststoffmaterial hinterspritzt.

Im folgenden Schritt wird der Rohling entnommen und in ein zweites Werkzeug, ein Überflutwerkzeug, eingelegt. Im anfolgenden fünften Schritt wird dieses zweite Werkzeug geschlossen und auf der dem harten Kunststoffmaterial gegenüberliegenden Seite mit dem transparenten Vergussmassematerial geflutet und in der Form noch ausgehärtet.

Anschliessend wird noch in der Form oder nach Entnahme des Rohlings aus der Form die umlaufende Abpresskante geschnitten und der Anguss dabei ebenfalls gerade abgeschnitten.

In einem abschliessenden Schritt kann das Bauteil durch entsprechende Ergänzung mit weiteren Funktionselementen wie Schnappscheiben, Leiterplatten etc. zum endgültigen Bauteil zusammengefügt werden.

### Generelle Vorteile eines Optionsbauteils nach der Erfindung:

Eine dreidimensional geschwungene Blende wird zur Verfügung gestellt mit
- geschlossener Oberfläche ohne Spalten
- hochwertiger und aufgeräumter Anmutung
- integrierten Bedien- und Anzeigeelementen
- Tasten mit taktilem Feedback
- Touchdisplays resistiv und kapazitiv möglich
- kapazitive Elemente über printed electronics möglich
- Tasten und Zierelementen in fast beliebiger Form
- Vielzahl von möglichen Oberflächenstrukturen (matt / glänzend)
- flachem Aufbau
- reduzierten Bauteilen

### Anwendungen (Beispiele):

- Mittelkonsole von Autos mit integrierten Tasten und Displays
- Lenkrad mit integrierten Tasten
- Türblende mit integrierten Tasten
- Medizinalgeräte
- Computer-Maus
- Spielkonsolen
- Tastatur jeglicher Art zb.für Mobiltelefone und Tischtelefone
- Hand held devices jeglicher Art
- Abdeckungen für Haushaltsgeräte

Entsprechend betrifft die Erfindung eine Blende aus einer hinterspritzen Folie welche auf der Oberseite mit einer klaren Vergussmasse zumindest teilweise, bevorzugt gesamthaft überzogen ist. In diese Blende sind Bedien- und Anzeigelemente integriert. Zudem weist die Oberflächenschicht zusätzlich angeformte Strukturen auf. Bei den Bedienelementen handelt es sich um Tasten mit einem taktilen Feedback. Bei den Anzeigeelementen kann es sich um resistive oder kapazitive Touchdisplays handeln. Die Blende umfasst eine hinterspritzte und dekorierte weichen TPU Folie, welche im RIM Verfahren mit Polyurethan überflutet ist. Auf der Unterseite der Tasten sind Schnappscheiben oder Kontaktpillen vorgesehen, die eine Tastenhaptik erzeugen und elektrischen Kontakt geben. Der Träger weist eine um die Tastengeometrie umlaufende Aussparung auf, um den Tastenhub zu ermöglichen. Auf der Unterseite der Tasten kann ein Mikroschalter oder eine andere Kontakttechnologie eingesetzt werden. Der Träger kann Lichtleiter oder Lichtabschirmungen aufweisen, um Funktionsbeleuchtungen zu realisieren. Die Oberflächenschicht kann im wesentlichen in beliebiger Dicke, Form und Struktur aufgebracht sein, sie kann als geschlossene Fläche vorgesehen sein oder nur in einzelnen Bereichen, dann aber wenigstens im Bereich der Funktionselemente und diese vollständig ohne Spalte überdeckend. Typischerweise wird gesammte Oberfläche mit einer transparenten Oberflächenschicht im Sinne einer Schutzschicht versehen, z.B. um Kratzfestigkeit zu erhöhen. In die Oberfläche kann eine Linsenstruktur eingebracht sein, um optische Linseneffekte zu erzielen. Die Vergussmasse kann dabei auch nicht reaktiv aushärten, sondern mittels Wärme oder anderen externen Energiequellen.

**BEZUGSZEICHENLISTE**

| | | | |
|---|---|---|---|
| 1 | geschlossene transparente Vergussmasse über gesamte Blende, flexibel in dünnen Bereichen | | aus transparenter Vergussmasse;Tasten mit taktiler Rückmeldung bei Betätigung. |
| 2 | angeformten Taste aus transparenter Vergussmasse | 23 | angeformte Joystickstur aus transparenter Vergussmasse |
| 3 | flexible und wengistens bereichsweise transparente Folie | 24 | Anzeigeelemente / Display hinter transparenter Vergussmasse, z.B. Touchdisplays |
| 4 | Bedruckung / Dekorationsschicht auf Folie aufgebracht | | |
| | | 25 | Zierelemente aus transparenter Vergussmasse |
| 5 | harter Kunststoffträger an Folie hinterspritzt, Trägerstruktur | 26 | Zuführrolle von 3 |
| | | 27 | Abführrolle von 3 |
| | | 28 | Spritzgussform, Schließseite, erster Arbeitsgang |
| 6 | flexibler Membranbereich ohne Kunststoffhinterspritzung | | |
| | | 29 | Spritzgussform, Düsenseite, erster Arbeitsgang |
| 7 | Mikroschalter / Schnappscheibe für Tastenfunktion | 30 | Vakuumkanäle in 28 |
| | | 31 | Spannrahmen |
| | | 32 | Nut für 31 in 29 |
| 8 | LED für Hinterleuchtung | 33 | Auswurfstifte |
| 9 | Anzeigeelement / Display | 34 | Zuführungsleitung für Kunststoff für zusammenhängenden harten Kunststoffträger |
| 10 | Leiterplatte | | |
| 11 | Funktionsträger | | |
| 12 | Positionsmarke(n) | | |
| 13 | Aussparung in 5 | 35 | Rohling mit hinterspritzter Folie |
| 21 | Oberfläche mit transparenter Vergussmasse überflutet | 36 | Rohling mit hinterspritzter und gefluteter Folie |
| 22 | angeformte Tastenstrukturen | 37 | Schnittstelle |
| 38 | Angussüberrest | | Vergussmasse |
| 39 | Spritzgussform, Schließseite, zweiter Arbeitsgang | 42 | Bauteil |
| | | 43 | Stege |
| 40 | Spritzgussform, diesen Seite, zweiter Arbeitsgang | | |
| | | | |
| 41 | Zuführungsleitung für | | |

## Patentansprüche

1. Verfahren zur Herstellung eines multifunktionalen Funktionsträgers (11) mit einer steifen Trägerstruktur (5), in welcher Bedienungselemente (7) und/oder Anzeigeelemente (9) hinter einer über im wesentlichen den gesamten Funktionsträger geschlossenen, transparenten Oberflächenschicht (1) angeordnet sind,
**dadurch gekennzeichnet, dass**
i) eine flache, flexible und vorzugsweise wenigstens bereichsweise transparente Kunststofffolie (3) mit einer Dicke im Bereich von 0.05-0.4 mm vorgelegt und auf diese optional wenigstens eine Positionsmarke (12) gedruckt und/oder geprägt wird;
ii) die flache Kunststofffolie (3) positionsgenau, vorzugsweise unter Verwendung der wenigstens einen Positionsmarke (12), in eine mit einem korrespondierenden Positionierungsmittel versehene Spritzgussform eingelegt wird, indem sie von Rolle (26) zugeführt wird, und die Kunststofffolie (3) unter Ausbildung eines im wesentlichen zusammenhängenden harten Kunststoffträgers (5) auf der ersten Seite hinterspritzt wird, wobei die Spritzgussform derart ausgestaltet ist, dass im Bereich der Bedienungselemente (7) und/oder Anzeigeelemente (9) wenigstens bereichsweise die Kunststofffolie (3) nicht hinterspritzt wird und freiliegend in Form von wenigstens einer Aussparung (13) oder wenigstens zwei Aussparungen (13) verbleibt;
iii) auf der der ersten Seite abgewandten zweiten Seite die Kunststofffolie (3) in der gleichen oder nach Übertragung des Rohlings in eine weitere Spritzgussform in dieser weiteren Spritzgussform im wesentlichen vollflächig mit einer transparenten härtenden Vergussmasse in einem RIM-Verfahren überflutet und unter Ausbildung einer geschlossenen transparenten Oberflächenschicht (1) mit einer Dicke von über im wesentlichen den gesamten Funktionsträger (11) wenigstens 0.1 mm beschichtet wird, wobei sich im Bereich der Aussparungen (13) wenigstens bereichsweise flexible Membranbereiche (6) ausbilden;
iv) in die Aussparungen (13) Bedienungselemente (7) und/oder Anzeigeelemente (9) eingelegt und mit dem Kunststoffträger (5) verbunden werden.

2. Verfahren nach Anspruch 1, **dadurch gekennzeichnet, dass** die Kunststofffolie (3), vorzugsweise in bereits auf der Vorderseite und/oder der Rückseite bedruckter Form, ab Rolle (26,27) zugeführt und in einem ersten Bearbeitungsschritt in einer ersten Spritzgussform (28,29) unter Ausbildung des harten Kunststoffträgers (5) hinterspritzt wird, wobei die Kunststofffolie (3) vor dem Schließen der Form vorzugsweise über konvexe Formbereiche diese bedeckend gespannt wird und/oder an konkave Formbereiche unter Verwendung von Unterdruck angelegt wird, und anschließend im Randbereich, vorzugsweise umlaufend, geklemmt wird, und dann die Form geschlossen wird.

3. Verfahren nach Anspruch 2, **dadurch gekennzeichnet, dass** beim Schließen und/oder beim Öffnen der Form (28,29) die Kunststofffolie (3) auf eine Umlaufkontur zugeschnitten wird.

4. Verfahren nach einem der vorhergehenden Ansprüche 2 oder 3, **dadurch gekennzeichnet, dass** nach dem ersten Bearbeitungsschritt der resultierende Rohling (36) auf der dem harten Kunststoffträger (5) gegenüberliegenden Seite der Kunststofffolie (3) mit der transparenten härtenden Vergussmasse überflutet wird, wobei vorzugsweise der Rohling (36) der ersten Spritzgussform (28,29), vorzugsweise unter Zuhilfenahme eines Auswerfers (33) entnommen wird, und in eine zweite Form (39,40) eingelegt wird, und in dieser die härtende Vergussmasse unter Ausbildung der transparenten Oberflächenschicht (1) angespritzt wird, und wobei vorzugsweise anschließend die umlaufende endgültige Bauteilkontur unter Ausbildung des Bauteils (42) zugeschnitten wird.

5. Verfahren nach Anspruch 4, **dadurch gekennzeichnet, dass** das Bauteil (42) anschließend durch Ergänzung mit weiteren Funktionselementen, insbesondere Schnappscheiben, Leiterplatten, Beleuchtungselementen, fertig gestellt wird.

6. Verfahren nach einem der vorhergehenden Ansprüche, **dadurch gekennzeichnet, dass** die Kunststofffolie (3) vor oder nach Schritt i), vorzugsweise auf der ersten und/oder der zweiten Seite, bedruckt und/oder dekoriert wird, vorzugsweise in einem Siebdruckverfahren, einem Laserdruckverfahren, einem Stempeldruckverfahren, einem Spraydruckverfahren, einem Offsetdruckverfahren oder einen Digitaldruckverfahren.

7. Verfahren nach einem der vorhergehenden Ansprüche, **dadurch gekennzeichnet, dass** die Kunststofffolie (3) durch den Schritt ii) wenigstens bereichsweise in eine dreidimensionale Oberflächenform übergeführt und in dieser stabilisiert wird.

8. Verfahren nach einem der vorhergehenden Ansprüche, **dadurch gekennzeichnet, dass** es sich beim Bedienungselement (7) um einen Schalter mit taktiler Rückmeldung handelt und/oder dass es sich beim Anzeigeelement (9) um ein LCD-Display, vorzugsweise um ein berührungsempfindliches Display handelt, und/oder dass der Funktionsträger (11) sowohl wenigstens ein Bedienungselement (7) in Form eines Schalters mit taktiler Rückmeldung als auch wenigstens ein Anzeigeelement (9), vorzugsweise ein resistives oder kapazitives berührungsempfindliches Anzeigeelement, aufweist.

9. Verfahren nach einem der vorhergehenden Ansprüche, **dadurch gekennzeichnet, dass** es sich bei der Kunststofffolie (3) um eine Kunststofffolie aus TPU oder aus Polyamid oder aus TPE oder einer Kombination davon handelt, vorzugsweise aus Polyamid 6 oder Polyamid 12 oder insbesondere aus TPU.

10. Verfahren nach einem der vorhergehenden Ansprüche, **dadurch gekennzeichnet, dass** die Kunststofffolie eine Dicke im Bereich von 100-300 µm, vorzugsweise im Bereich von 150-225 µm aufweist.

11. Verfahren nach einem der vorhergehenden Ansprüche, **dadurch gekennzeichnet, dass** es sich bei der Vergussmasse zur Bildung der Oberflächenschicht (1) um ein transparentes, selbsthärtendes und/oder wärmehärtendes Polyurethanharz handelt, wobei dieses wenigstens im Bereich der Bedienungselemente (7) und der wenigstens teilweise darum herum angeordneten Membranbereiche (6) eine Dicke von nicht mehr als 0.4 mm aufweist, und wobei vorzugsweise in diesen Bereichen die Oberflächenschicht (1) eine Dicke von wenigstens 0.1 mm oder wenigstens 0.2 aufweist, und/oder wobei dieses im hinterspritzten Bereich und/oder im Membranbereich eine Dicke im Bereich von 0.1mm - 0.5mm aufweist und die Bedienungselemente und Zierelemente oder Displayfenster eine zusätzliche Dicke von 0 bis 3mm aufweisen können, bevorzugt von 1mm.

12. Verfahren nach einem der vorhergehenden Ansprüche, **dadurch gekennzeichnet, dass** nach Schritt ii) der Rohling wenigstens bereichsweise bedruckt, vorzugsweise unter Verwendung eines Verfahrens nach Anspruch 2, und/oder dekoriert und/oder einer Laserbeschriftung unterzogen wird.

13. Multifunktionaler Funktionsträger (11) mit wenigstens einem Bedienungselement (7) und vorzugsweise wenigstens einem Anzeigeelement (9) **gekennzeichnet durch** eine mit einem zusammenhängenden harten Kunststoffträger (5) bis auf wenigstens eine oder wenigstens zwei Aussparungen (13) auf einer ersten Seite direkt und unmittelbar hinterspritzte Kunststofffolie (3) einer Dicke im Bereich von 0.05-0.4 mm, die auf der gegenüberliegenden zweiten Seite eine unmittelbare, im wesentlichen geschlossene transparente Oberflächenschicht (1) aus einer gehärteten Vergussmasse aufweist, wobei in wenigstens einer der Aussparungen (13) wenigstens ein Bedienungselement (7) in Form eines Schalters (7) mit taktiler Rückmeldung angeordnet ist, um welchen herum ein wenigstens teilweise umlaufender flexibler Membranbereich (6) zur Ermöglichung des Tastenhubs vorhanden ist, bei welchem der flexible Schichtaufbau nur aus aus gegebenenfalls bedruckter Kunststofffolie (3) und Oberflächenschicht (1) besteht.

14. Funktionsträger (11) nach Anspruch 10, **dadurch gekennzeichnet, dass** er in einem Verfahren gemäß einem der Ansprüche 1-9 hergestellt ist.

15. Funktionsträger (11) nach einem der vorhergehenden Ansprüche 10-11, **dadurch gekennzeichnet, dass** er wenigstens ein Anzeigeelement (9) aufweist, und dass das wenigstens eine Bedienungselement (7) und das wenigstens eine Anzeigeelement (9) auf einer gemeinsamen Leiterplatte (10) befestigt sind, welche am harten Kunststoffträger (5) befestigt ist, wobei vorzugsweise sämtliche Bedienungselement (7) und Anzeigeelemente (9) des gesamten Funktionsträgers (1) auf einer einzigen gemeinsamen Leiterplatte (10) angeordnet sind
und/oder dass auf der Oberfläche, insbesondere in den Bereichen der Bedienungselemente (7) über die Oberfläche wenigstens teilweise hervorstehende Bereiche (2) aus der Vergussmasse ausgebildet sind,
und/oder dass der Hartkunststoff Träger (5) und/oder eine Leiterplatte, auf welcher Bedienungselemente (7) und/oder Anzeigeelemente (9) angeordnet sind Lichtleiter, Lichtquellen, und/oder Lichtabschirmungen aufweist,
und/oder dass es sich um ein Konsolenelement für ein Fahrzeug, um ein Lenkrad für ein Fahrzeug, um eine Medizinalvorrichtung, um eine Computermaus, um eine Spielkonsole oder um eine Oberfläche für ein Mobiltelefon oder ein Tischtelefon handelt.
